(19) **Europäisches Patentamt / European Patent Office / Office européen des brevets**

(11) **EP 4 432 170 A1**

(12) **EUROPEAN PATENT APPLICATION**

(43) Date of publication:
**18.09.2024 Bulletin 2024/38**

(21) Application number: **23162437.0**

(22) Date of filing: **16.03.2023**

(51) International Patent Classification (IPC):
**G06N 3/09** $^{(2023.01)}$     **G06N 3/084** $^{(2023.01)}$

(52) Cooperative Patent Classification (CPC):
**G06N 3/09; G06N 3/084;** G06N 3/0464

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **TOYOTA JIDOSHA KABUSHIKI KAISHA**
  **Aichi-Ken 471-8571 (JP)**
• **Concordia University**
  **Montréal, Québec H3G 1M8 (CA)**

(72) Inventors:
• **AL JUNDI, Rahaf**
  **1140 BRUSSELS (BE)**
• **BELILOVSKY, Eugene**
  **MONTREAL, Québec, H3G 1M8 (CA)**
• **ASADI, Nader**
  **MONTREAL, Québec, H3G 1M8 (CA)**

(74) Representative: **Cabinet Beau de Loménie**
  **158, rue de l'Université**
  **75340 Paris Cedex 07 (FR)**

Remarks:
Amended claims in accordance with Rule 137(2) EPC.

(54) **METHOD FOR TRAINING A CLASSIFICATION MODEL USING CLASS PROTOTYPES OF PREVIOUS CLASSES, AND CORRESPONDING SYSTEM**

(57) A method for training a classification model ($f$) with a training dataset ($X, Y$) and a set of class prototypes ($p_c$), the method comprising an initialization of a class prototype for at least one class of the training dataset not having a class prototype in the set of class prototypes, and wherein training is performed using a loss function including:
- a first component ($L_{SC}$) to learn, by the classification model, representation of samples of the training dataset,
- a second component ($L_p$) configured to update the at least one initialized class prototype by optimizing a similarity between the initialized class prototype and the output of the classification model,
- a third component ($L_d$) configured to update at least one class prototype of the set of class prototypes and the classification model by preserving, during training, an order distances.

FIG. 1

EP 4 432 170 A1

**Description**

BACKGROUND OF THE INVENTION

1. Field of the Invention

The invention relates to the field of classification models, and more particularly to training classification models in a context of continual learning.

2. Description of Related Art

Classification models are used in a variety of tasks. A classification model takes data as input (for instance an image, a set of physical measures) and outputs one or more classes associated with this input. For instance, a given classification model may be designed for the task of classifying objects displayed on images with respect to a given set of classes.

Classification models are particularly useful in the domain of autonomous driving, as they enable detection of specific objects (for example road signs, obstacles on the road) which have to be taken into account by the autonomous driving system for making decisions.

The domain of machine learning offers many types of classification models (for instance neural networks) and methods to train them based on datasets. In particular, neural networks have demonstrated high performances (precision and accuracy) when trained to classify among a given set of classes. Nevertheless, when trained to recognize new classes, a neural network (and more generally a machine learning model) tends to forget the classes that it previously learned. In other words, learning new classes tends to decrease the classification performance of a model on previously learned classes. Similarly, when a model is trained on new data belonging to a different distribution from the initial data it was previously trained with, this model tends to forget the initial data. This forgetting of previously learned classes or data distribution is called "catastrophic forgetting".

The term "continual learning" depicts the situation when a classification model is trained in successive training stages with different sets of classes to be learned for each stage (for instance different road signs corresponding to a new region) or a different distribution of the training data on each stage (for instance images displaying a different type of landscape or road signs with reduced visibility due to fog).

Continual learning usually applies under three scenarios.

In the domain-incremental setting of a continual learning, the distribution of data changes from one stage of training to another.

In the task-incremental setting, the set of classes or the data distribution changes from one stage to another, and the model is conditioned differently according to the set of classes or the data distribution corresponding to its inputs. In other words, a given subpart of the model parameters are initialized when the model is trained on a new set of classes. For instance, for training a deep neural network in a task incremental setting, the head of the network (e.g. the last layer) may be replaced when trained on a new set of classes.

In the class-incremental setting, the set of classes changes from one stage to another, without conditioning of the model with respect to the classes of its inputs.

In order to prevent catastrophic forgetting in continual learning settings, methods of the prior art (e.g. [Rebuffi et al., 2017], [Chaudhry et al., 2019], [De Lange and Tuytelaars, 2021], [Caccia et al, 2022]) propose to store data of previous training stages and to reuse them in the current training stage. Unfortunately, storing and reusing of previous training data is expensive in terms of memory and computing resources.

[De Lange and Tuytelaars, 2021] and [Caccia et al, 2022] propose learning prototypes of classes (i.e. an element that represents the typical output of a model when inputs of a given class are inputted to the model). But their methods are not satisfactory, especially in the class-incremental setting, as they cause the classification accuracy to drop for inputs having classes absent in the current training stage. Furthermore, these methods also require storing of previous training data.

There remains a need for training methods that can be used in a context of continual learning and that limit catastrophic forgetting.

SUMMARY OF THE INVENTION

According to an aspect, the present disclosure provides a method for training a classification model with a training dataset and a set of class prototypes, the method comprising an initialization of a class prototype for at least one class of the training dataset not having a class prototype in the set of class prototypes, and wherein training is performed using a loss function including:

- a first component to learn, by the classification model, representation of samples of the training dataset based on classes respectively associated to said samples in the dataset,
- a second component configured to update the at least one initialized class prototype by optimizing a similarity between the initialized class prototype and the output of the classification model for an input of the corresponding class from the training dataset,
- a third component configured to update at least one class prototype of the set of class prototypes and the classification model by preserving, during training, an order of the relative distances between the class prototype and each output of the classification model for an input of the corresponding class from the training dataset.

The classification model can be a neural network. For example it is configured to be able to receive samples as input (for example samples from the dataset). This can be implemented by having a number of input neurons that correspond to the dimensionality of the samples. In a particular embodiment, it can have the architecture of a fully convolutional neural network or of a transformer.

The method can be implement by one or more computers.

Thus, the above method proposes to handle new classes present in the dataset by initializing a prototype and by training this prototype so that, after training, there is a good similarity between an initialized class prototype and the output of the model, by means of the second component. The above method only uses prototypes and a current training dataset: it does not require storing actual training data (i.e. samples) from a previous training. This implies that continual learning can easily be performed.

Furthermore, the above defined loss function ensures that catastrophic forgetting is avoided by means of the prototypes.

Previous classes, for example obtained in a previous execution of the above method, have a class prototype provided along with the dataset. These are also trained along with the model. The training is however performed so as to preserve an order for a plurality of distances, the distances between the outputs of the model and the prototypes. This implies that prior to training, for a first input having a first output at a first distance from the prototype, and for a second input having a second output at a second distance from the prototype, if the first distance is smaller than the second distance, then, after training the model and the prototype, the first distance has to remain smaller than the second distance. If before training the first distance is greater than the second distance, then after training the first distance will still be greater than the second distance. This implies that the model will be able to maintain its behavior for inputs/classes for example obtained in a previous execution of the method (one that led to obtaining the prototypes).

By way of example, the training dataset comprises samples and their associated class. For example, samples are images and classes are types of objects present in the images.

The above defined first component performs a training of the classification model, in other words, the classification model is trained by inputting samples from the dataset, observing the output of the model, and comparing the output with an expected output (a class) from the dataset.

The above method applies to a particular training phase, for example part of a session/task. For example, the training dataset can be a batch or mini-batch from a larger dataset.

Using a loss function having three components allows performing a joint training of the model (impacted by the first and third components), of the initialized prototypes (impacted by the second component), and of the class prototypes (impacted by the third component), using a single loss. The loss can be back propagated into the model, the initialized prototypes, and the prototypes (the ones provided along with the dataset).

According to a particular embodiment, the first component uses a projection model configured to receive as input the output of the classification model and configured to output a feature having a lower dimensionality than the output of the classification model, wherein the first component is based on the output of the projection model.

It has been observed by the inventors that training the model through the first component is particularly improved by back propagating a loss through a projection head rather than in the classification model directly. This has been observed to facilitate convergence of the training. In fact, as the first component can be trained on samples with strong augmentations (horizontal flip, color jitter), this may lead to a projection model invariant to these augmentations which sometimes could hinder the main classification performance, this is why the classification is learned by the classification model at its level and why the projection model is favorable.

According to a particular embodiment, the first component is configured to perform supervised contrastive learning.

Supervised contrastive learning has been observed to be particularly efficient in the presence of a projection head. In particular, the advantages of supervised contrastive learning are that:

1) It learns more robust and generalizable representations than Cross Entropy.
2) It is less prone to forgetting when learning in a continual learning manner.
3) When learning the classes weights, or the linear classification head with Cross Entropy, a big interference with previous classes prototypes is incurred.

Supervised contrastive learning has been described in document [Khosla et al.,2020].

According to a particular embodiment, the first component is written as:

$$L_{SC}(X) = - \sum_{x_i \in X} \frac{1}{|A(i)|} L_{SC}(x_i)$$

with:

$$L_{SC}(x_i) = \sum_{x_p \in A(i)} log \frac{h(g \circ f(x_p), g \circ f(x_i))}{\sum_{x_a \in X/x_i} h(g \circ f(x_a), g \circ f(x_i))}$$

wherein $f$ designates the classification model, $X$ designates a batch of samples from the dataset, $x_i$ designates a sample of index $i$ from the dataset, $x_p$ designates a sample of index $p$ from the dataset, $x_a$ designates a sample of index $a$ from the dataset, $g$ designates the projection model, $A(i)$ designates samples that form positive pairs with $x_i$ (i.e. samples of the same class of $x_i$ and augmentations of $x_i$), and h is the following function:

$$h(a, b) = \exp(sim(a, b)/\tau)$$

wherein $\tau$ is a constant parameter and *sim* is the following function:

$$sim(a, b) = \frac{a^T b}{\|a\| \|b\|}$$

The above formula for the first component corresponds to an implementation of supervised contrastive learning.

According to a particular embodiment, initialization of a class prototype comprises determining a random prototype having a dimensionality (for example the number of dimensions of prototypes) equal to a dimensionality of the output of the classification model (for example, the number of neurons of a final layer of the classification model).

According to a particular embodiment, the second component is written as:

$$L_p(X) = - \frac{1}{|X|} \sum_{x_i, y_i \in X, Y} sim(p_{yi}, sg[f(x_i)])$$

wherein f designates the classification model, $x_i$ designates a sample of index i from the dataset, $y_i$ designates a class associated with $x_i$ in the dataset, $p_{yi}$ designates a class prototype for $y_i$ from the at least one initialized class prototypes (i.e. new prototypes), sg[] is the stop-gradient operation, X, Y designates the dataset, and sim is the following function:

$$sim(a, b) = \frac{a^T b}{\|a\| \|b\|}$$

In other words, this component only contains what the person skilled in the art calls a tightness term. This loss has no impact on the other class prototypes (i.e. the ones that have not been initialized in the execution of the method). Also, this component does not include contrastive terms (a term in the loss which encourages the samples of different classes/non-positive pairs to move away). Using the stop-gradient operation allows not interfering with the classification model and the other class prototypes (not initialized).

According to a particular embodiment, the third component is written as:

$$L_d(X) = \sum_{p_k \in P_o} KL(P_t(k)||P_{t-1}(k))$$

wherein

$$P_t(k) = P_t(p_k^t, X)_i = \frac{h(p_k^t, f\ (x_i)}{\sum_{x_j \in X} h(p_k^t, f\ (x_j))}$$

and wherein $f$ designates the classification model, $X$ designates a batch of samples from the dataset, $x_i$ designates a sample of index $i$ from the dataset, $x_j$ designates a sample of index $j$ from the dataset, $p_k^t$ is a prototype of index $k$ (for example from the set of prototypes provided as input, for example old prototypes), KL is the Kullback-Leiblerand divergence, and h is the following function:

$$h(a, b) = \exp\left(\frac{sim(a, b)}{\tau}\right)$$

wherein $\tau$ is a constant and *sim* is the following function:

$$sim(a, b) = \frac{a^T b}{\|a\|\|b\|}.$$

This component has been observed to be more flexible so as to better adapt to new classes (the ones that are initialized) while keeping the order of the relative distances. Also, maintaining the order is implemented by the above formulas. The above component differs from distillation approaches where similarities for each sample are computed over existing classes. In normal knowledge distillation terms, similarities distributions are computed for each sample over classes prototypes. In the present embodiment, the distribution of similarities is computed for each prototype over the set of samples features in a given mini batch. The goal is to preserve the order of similarities of new task samples to each prototypes

According to a particular embodiment, after training, the at least one updated initialized prototype and the at least one updated prototype form a new set of prototypes, the method further comprising a new training of the model using the new set of prototypes and a new training dataset that differs from the training dataset.

Thus, this particular embodiment is limited to continual learning.

According to a particular embodiment, the training dataset and the new training dataset differ by including different samples and/or samples having different classes and/or are associated with different tasks.

The disclosure also provides a classification model trained by the method as defined above.

The disclosure also provides a system for training a classification model ($f$) with a training dataset ($X, Y$) and a set of class prototypes ($p_c$), the system comprising a module configured to perform initialization of a class prototype for at least one class of the training dataset not having a class prototype in the set of class prototypes, and a training module configured to use a loss function including:

- a first component ($L_{SC}$) to learn, by the classification model, representation of samples of the training dataset based on classes respectively associated to said samples in the dataset,
- a second component ($L_p$) configured to update the at least one initialized class prototype by optimizing a similarity between the initialized class prototype and the output of the classification model for an input of the corresponding class from the training dataset,
- a third component ($L_d$) configured to update at least one class prototype of the set of class prototypes and the classification model by preserving, during training, an order of the relative distances between the class prototype and each output of the classification model for an input of the corresponding class from the training dataset.

This system for training can be configured to implement any embodiment of the above defined method.

The disclosure also provides a classification system including a classification model trained by the method as defined above.

The disclosure also provides a vehicle comprising the classification system as defined above. For example, in this embodiment, the classification model is configured to receive images (samples are images) and the classes relate to objects observable when the vehicle is on a road, for example. The classification model can receive images acquired by a camera of the vehicle.

In one particular embodiment, the steps of the method are determined by computer program instructions.

Consequently, the invention is also directed to a computer program for executing the steps of a method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a schematic representation of the steps of a method according to an example;
FIG. 2 is an illustration of the maintaining of the order of relative distances;
FIG. 3 is a schematic representation of a system for training according to an example;
FIG. 4 is a schematic representation of a vehicle according to an example.

DETAILED DESCRIPTION OF EMBODIMENTS

We will now describe a method for training a classification model in a context of continual learning.

In the context of continual learning, training data for a classification model is received continuously, for example in a (possibly never-ending) stream of data divided into separate training sessions. For a session $S_t$, a set of data $X^t$ and the respective labels $Y^t$ (classes) are drawn from a distribution $D_t$ such that $P(X,Y|T = t)$. For a new learning session, it is assumed that access to samples from previous sessions is restricted: this means that once the classification model has been trained using a given dataset, it may no longer be possible to access the samples from this dataset later.

Continual learning applies in three possible situations. In task-incremental settings where $(X^t, Y^t)$ represent a separate task. For example a task represents the set of data that is received in a new training session $S_t$. It could represent a new set of classes, or a new set of classes where samples are drawn from a new domain, e.g., at first it is learned about the task of classifying finegrained aircraft and at another session it is learned about fine-grained types of cars.. In class-incremental scenarios, changes in $P(X)$ induce a shift on $P(Y)$ (in other words, the distribution of data changes). In domain-incremental learning, changes in $P(X)$ do not induce a shift on $P(Y)$.

In the present description, a classification model $f$ is considered. This classification model has a neural network structure, and, for example, it has an encoder structure. For a given sample $x$, $f(x) \in \mathbb{R}^d$ is the output of the classification model. Here, $f$ can be considered to be a feature extractor that maps an input sample to another feature space $f(x)$. Also, so as to be able to train the classification model using supervised contrastive learning, a projection model is used such that: $g \circ f(x) \in \mathbb{R}^k$ with $k$ being an integer smaller than $d$. $g$ is a projection model, sometimes called a projection head, that maps the features $f(x)$ into another latent space. By way of example $g$ is a neural network such as a two layer perceptron that maps the output of $f$ to another lower smaller dimension space $g \circ f(x)$.

Also, by way of example, in the present application, the classification model $f$ can have the architecture of a fully convolutional neural network (for example a ResNet-18 model) or of a transformer. Preferably, $f$ can map the input from the raw data space (e.g. images) to the space where similar samples lie close together and on which classification can be performed.

The present method is directed to minimizing an objective loss $L_t$, with $t$ indicating the session/task, on a new training dataset which is associated with the current session $t$. For every new session, there is a new dataset. Also, the present method aims at not increasing the objective loss of previously learned sessions $L_{i,\forall i<t}$.

Methods according to the prior art to control the loss of previously encountered sessions use a buffer of stored samples and reuse them upon encountering new sessions. In the presently described method, access to past data (samples) is not required. Here, the behavior of the previously seen classes of objects is approximated via a set of prototypes. When a new session begins, a novel distillation term is used to approximate the now-inaccessible loss of the previous sessions and set to restrict this surrogate loss in order to control the loss of the previously seen sessions. The loss function to be used will now be described.

It is proposed to use a loss function having three components, for example in the following form:

$$L(X) = L_{SC}(X) + \alpha L_p(X, P_c) + \beta L_d(X, P_0)$$

We will now describe the three components $L_{SC}$, $L_p$, and $L_d$, $\alpha$ and $\beta$ being two hyperparameters set according to the application.

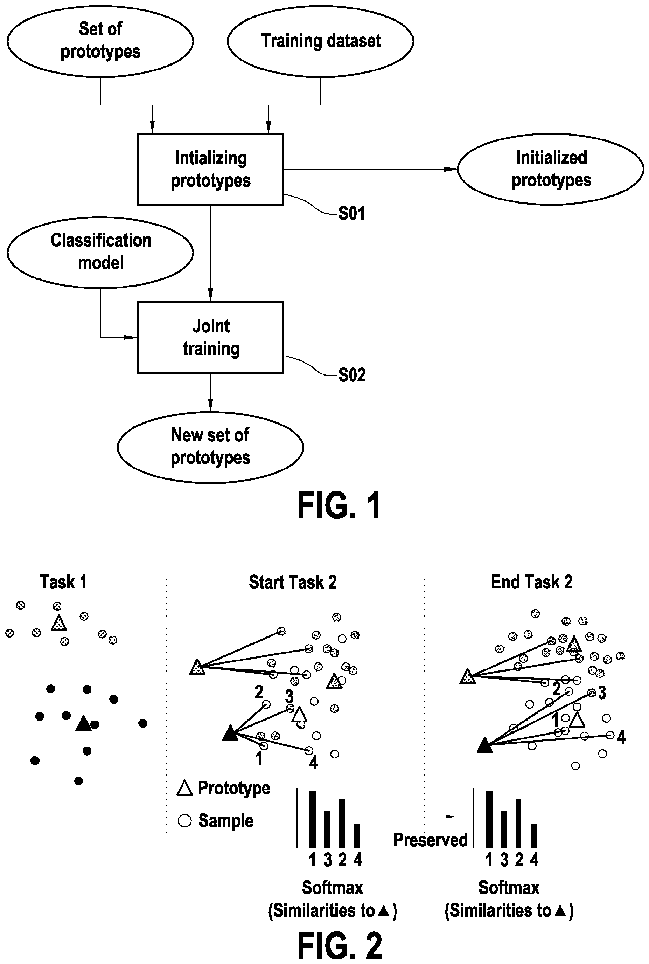

Figure 1 is a schematic representation of the steps of the method. As shown on this figure, the method uses a set of class prototypes (sometimes referred to as old prototypes or previous prototypes), a training dataset such as the one described before, and a classification model $f$.

The first component $L_{SC}$ is configured to learn, by the classification model, representation of samples of the training dataset based on classes respectively associated to said samples in the dataset. In particular, here, supervised contrastive learning is used for this component (the disclosure is however not limited to supervised contrastive learning).

Supervised Contrastive Learning [Khosla et al., 2020] is a powerful representation learning method observed to be useful in many downstream tasks. [Davari et al., 2022] employed Supervised Contrastive training for continual learning and showed that the learned representations are less prone to forgetting compared to that learned with Cross Entropy loss. Thus, it is proposed to use supervised contrastive learning for learning representations. In this context and as explained above, only the first component $L_{SC}$ implements supervised contrastive learning, with the following loss component, and using the projection head $g$:

$$L_{SC}(X) = -\sum_{x_i \in X} \frac{1}{|A(i)|} L_{SC}(x_i)$$

with:

$$L_{SC}(x_i) = \sum_{x_p \in A(i)} \log \frac{h(g \circ f(x_p), g \circ f(x_i))}{\sum_{x_a \in X/x_i} h(g \circ f(x_a), g \circ f(x_i))}$$

wherein $f$ designates the classification model, $X$ designates a batch of samples from the dataset, $x_i$ designates a sample of index i from the dataset, $x_p$ designates a sample of index $p$ from the dataset, $x_a$ designates a sample of index $a$ from the dataset, $g$ designates the projection model, $A(i)$ designates samples that form positive pairs with $x_i$, and $h$ is the following function:

$$h(a, b) = \exp(sim(a, b)/\tau)$$

wherein $\tau$ is a constant parameter and $sim$ is the following function:

$$sim(a, b) = \frac{a^T b}{\|a\| \|b\|}$$

$\tau$, similarly to all the hyperparameters that are mentioned in the present application, is based on performance in a holdout set. The larger $\tau$ is the smoother the output is.

The above formula is such that it increases the similarity between the output of the projection head for inputs of the same class.

In order to avoid catastrophic forgetting, the present method uses prototypes. Here, prototypes are of two types. A first type of prototypes is the initialized prototypes. As shown on figure 1, the method comprises a first step S01 of initialization of a class prototype for at least one class of the training dataset not having a class prototype in the set of class prototypes, or preferably for all the classes of the training dataset not having a class prototype in the set of class prototypes. In other words, initialization of a class prototype is performed for all the new classes.

Initialization of class prototypes can be performed by using a random value having the dimensionality of the output of the classification model ( $i.e. \in \mathbb{R}^d$ ).

Class prototypes have been used in the prior art, for example in documents [Caccia et al., 2022] and [De Lange & Tuytelaars, 2021]. Class prototypes allow having a generic sample representation for each class. Class prototypes are learned after being initialized in the current training session.

Methods according to the prior art have proposed using Softmax in combination with the Cross-Entropy loss, which, applied to a single sample $x_i$ and prototype $p$ has the following form:

$$-sim\big(p, f_\theta(x_i)\big) + \log(\sum_{p_{k\in P}} h(p_k, f_\theta(x_i)))$$

In the above equation, $f_\theta$ designates the classification model of parameters $\theta$, $P$ the set of prototypes. It should be noted that in the above equation, the first term considers only tasks prototypes, for the second, all prototypes are included, which differs from the present method where this is separated into two components.

It has been observed that in a class-incremental setting, the Softmax combined with Cross-Entropy produces a large interference with previously learned classes due to terms that suppress previous class logits ([Caccia et al., 2022], [Ahn et al., 2021]).

The present method therefore proposes learning class prototypes, here only initialized prototypes, in a different manner, using only the "tightness" term of the above loss (as defined in document [Boudiaf et al, 2020]). This has been observed to optimize initialized prototypes to be representative of class samples without introducing any suppression of prototypes of previous classes. The second component $L_p$, dedicated to new classes, is written:

$$L_p(X) = -\frac{1}{|X|}\sum_{x_i, y_i \in X, Y} sim(p_{yi}, sg[f\ (x_i)])$$

wherein f designates the classification model, $x_i$ designates a sample of index $i$ from the dataset, $y_i$ designates a class associated with $x_i$ in the dataset, $p_{yi}$ designates a class prototype for $y_i$ from the at least one initialized class prototypes, $sg[]$ is the stop gradient operation, $X$ designates the dataset, and $sim$ is the following function:

$$sim(a, b) = \frac{a^T b}{\|a\|\|b\|}$$

Thus, the above equation only contains a tightness term, which is contrast-free and does not have effect on the previous class prototypes (the ones provided at the beginning of the method). This loss component only optimizes the initialized class prototypes

Also, the above loss component has no impact on the classification model (because the stop gradient operation is used) and on the previous class prototypes.

We will now describe the third component dedicated to training the previous prototypes, provided along the training dataset, and the classification model.

In the present method, class prototypes are learned in isolation for each task/session. As the classification model is trained using the first component, prototypes of previous classes will become outdated leading to the forgetting of previously learned classes. As shown in document [Davari et al., 2022], this forgetting may simply correspond to movement in the decision boundary, despite classes being well separated. To update old prototypes along with the classification model, it is proposed to use a similarity distillation term using new class data as a proxy for old data. In other words, the third component updates old prototypes and the classification model.

Classification model $f_{\theta_t}$ (wherein $\theta_t$ indicates the parameters of the classification model at the current task) and a set of prototypes $P_0^t$ provided for this session/task $t$, respectively correspond to $f_{\theta_{t-1}}$ and $P_0^{t-1}$. For a mini-batch of samples from the training dataset $X$, and a prototype $p_k^t$ of index $k$ from $P_0^t$, the Softmax output $P_t(p_k^t, X)$, for a sample of index i, we have:

$$P_t(p_k^t, X)_i = \frac{h(p_k^t, f(x_i))}{\sum_{x_j \in X} h(p_k^t, f(x_j))}$$

Denoting $P_t(p_k^t, X)_i$ as $P_t(k)$, it is possible to construct a relation distillation term as the Kullback-Leibler divergence between prototype-samples similarity distribution estimated with the model at session $t$ - 1 and during the current session $t$:

$$L_d(X) = \sum_{p_k \in P_o} KL(P_t(k) || P_{t-1}(k))$$

wherein

$$P_t(k) = P_t(p_k^t, X)_i = \frac{h(p_k^t, f_{\theta_t}(x_i))}{\sum_{x_j \in X} h(p_k^t, f_{\theta_t}(x_j))}$$

and wherein $f_{\theta_t}$ designates the classification model (for the sake of simplicity, $\theta_t$ can be dropped, as proposed in the previous equations), $X$ designates a batch of samples from the dataset, $x_i$ designates a sample of index $i$ from the dataset, $x_j$ designates a sample of index $j$ from the dataset, $p_k^t$ is a prototype of index $k$, KL is the Kullback-Leiblerand divergence, and h is the following function:

$$h(a, b) = \exp\left(\frac{sim(a, b)}{\tau}\right)$$

wherein $\tau$ is a constant and *sim* is the following function:

$$sim(a, b) = \frac{a^T b}{\|a\| \|b\|}.$$

The third component ($L_d$) is therefore configured to update at least one class prototype of the set of class prototypes and the classification model by preserving, during training, an order of the relative distances between the class prototype and each output of the classification model for an input of the corresponding class from the training dataset.

Figure 2 is an illustration of the implementation of the method between a task $t$ = 1 and a task $t$ = 2, between the start of the second task ("2") and the end of the second task. For classes already present in task 1, the distance between four selected samples and the corresponding prototype is ordered similarly between the beginning and the end of the session. This results in flexibility in the representations in order to adapt to new classes while keeping the relative distances of many samples to the prototype as similar as possible.

The three components of the following equation have now been described, and training can be performed using the following loss function:

$$L(X) = L_{SC}(X) + \alpha L_p(X, P_c) + \beta L_d(X, P_0)$$

This training is a joint training of the classification model, the initialized class prototypes, and the class prototypes of the set of class prototypes provided along with the model.

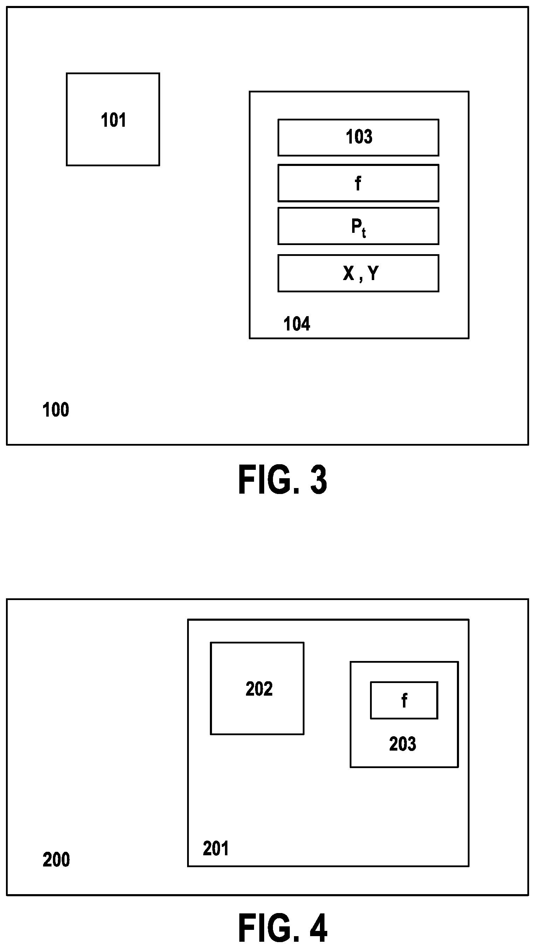

Figure 3 is a schematic illustration of a system for training a classification model. The system has the structure of a computer and is able to implement the method of figure 1.

More precisely, the system comprises a processor 101 and a non-volatile memory 104. In the non-volatile memory, computer program instructions 103 are stored. When these instructions are executed by the processor, the method is performed on classification model $f$ stored in the memory and using provided class prototypes $P_t$ and a training dataset $X, Y$.

The processor and the computer program instructions implement a module configured to perform initialization of a class prototype for at least one class of the training dataset not having a class prototype in the set of class prototypes, and a training module configured to use a loss function including:

- a first component ($L_{SC}$) to learn, by the classification model, representation of samples of the training dataset based on classes respectively associated to said samples in the dataset,
- a second component ($L_p$) configured to update the at least one initialized class prototype by optimizing a similarity between the initialized class prototype and the output of the classification model for an input of the corresponding class from the training dataset,
- a third component ($L_d$) configured to update at least one class prototype of the set of class prototypes and the classification model by preserving, during training, an order of the relative distances between the class prototype and each output of the classification model for an input of the corresponding class from the training dataset.

Figure 4 shows a vehicle 200 including a classification system 201. This classification system has the structure of a computer. It includes a processor 202 and a non-volatile memory 203. In the non-volatile memory 203, a classification model $f$ is stored, for example trained using the method of figure 1. The classification model $f$ can be used to classify objects observed by a camera of vehicle 200.

The above method has been observed to avoid forgetting on various continual learning settings. In particular, the following datasets have been used to train the classification model:

Split-CIFAR100 [Krizhevsky et al., 2009];
Split-MiniImageNet [Chrabaszcz et al., 2017];

Indicators used to measure the effectiveness of the method were the observed accuracy $A_{i,j}$ as the accuracy of the model after step $i$ on the test data of task $j$. Also, the average observed accuracy at the end of the sequence is $\frac{1}{T}\sum_{t \in T} A_{T,t}$ as used in [Li & Hoiem, 2017].

Various baselines were used such as:

- [Li & Hoiem, 2017]
- [Huszar, 2017]
- [Wu et al., 2021]
- [Chaudry et al., 2019]
- [Rebuffi et al., 2017]
- [Caccia et al, 2022]

Hyperparameters were selected via a grid search performed on the validation set. The selection process was done on a per-dataset basis, that is we picked the configuration which maximized the accuracy averaged over different settings. It has been observed that for the present method, the same hyperparameter configuration worked well across all settings and datasets.

In a context of task-incremental setting, it has been observed that the present method outperforms other methods by a significant margin on the above mentioned two datasets.

In a class-incremental setting, with no access to previous data, the present method outperforms other "replay-free" methods.

References

[Rebuffi et al., 2017] : Rebuffi, S.-A., Kolesnikov, A., Sperl, G., and Lampert, C. H. icarl: Incremental classifier and representation learning. In Proc. CVPR, 2017.

[Chaudhry et al., 2019] Chaudhry, A., Ranzato, M., Rohrbach, M., and Elhoseiny, M. Efficient lifelong learning with a-gem. In ICLR 2019.

[De Lange and Tuytelaars, 2021] : De Lange, M. and Tuytelaars, T. Continual prototype evolution: Learning online from non-stationary data streams. In Proceedings of the IEEE/CVF International Conference on Computer Vision, pp. 8250-8259, 2021.

[Caccia et al, 2022] : Caccia, L., Aljundi, R., Asadi, N., Tuytelaars, T., Pineau, J., and Belilovsky, E. New insights on reducing abrupt representation change in online continual learning. arXiv preprint arXiv:2203.03798, 2022.

[Khosla et al., 2020] : Khosla, P., Teterwak, P., Wang, C., Sarna, A., Tian, Y., Isola, P., Maschinot, A., Liu, C., and Krishnan, D. Supervised contrastive learning. Advances in Neural Information Processing Systems, 33:18661-18673, 2020.

[Davari et al., 2022] : Davari, M., Asadi, N., Mudur, S., Aljundi, R., and Belilovsky, E. Probing representation forgetting in supervised and unsupervised continual learning. In Proceedings of the IEEE/CVF Conference on Computer Vision and Pattern Recognition, pp. 16712-16721, 2022.

[Ahn et al., 2021] : Ahn, H., Kwak, J., Lim, S., Bang, H., Kim, H., and Moon, T. Ss-il: Separated softmax for incremental learning. In Proceedings of the IEEE/CVF International Conference on Computer Vision (ICCV), pp. 844-853, October 2021.

[Boudiaf et al, 2020] : Boudiaf, M., Rony, J., Ziko, I. M., Granger, E., Pedersoli, M., Piantanida, P., and Ayed, I. B. A unifying mutual information view of metric learning: cross-entropy vs. pairwise losses. In European conference on computer vision, pp. 548-564. Springer, 2020.

[Krizhevsky et al., 2009] : Krizhevsky, A., Hinton, G., et al. Learning multiple layers of features from tiny images. Technical report, University of Toronto, 2009.

[Chrabaszcz et al., 2017] : Chrabaszcz, P., Loshchilov, I., and Hutter, F. A downsampled variant of imagenet as an alternative to the cifar datasets. arXiv preprint arxiv: 1707.08819, 2017.

[Li & Hoiem, 2017]: Li, Z. and Hoiem, D. Learning without forgetting. IEEE Transactions on Pattern Analysis and Machine Intelligence, 40(12):2935-2947, 2017.

[Huszar, 2017]: Husz ar, F. On quadratic penalties in elastic weight consolidation. arXiv preprint arXiv:1712.03847, 2017.

**Claims**

1. A method for training a classification model ($f$) with a training dataset ($X, Y$) and a set of class prototypes ($p_c$), the method comprising an initialization of a class prototype for at least one class of the training dataset not having a class prototype in the set of class prototypes, and wherein training is performed using a loss function including:

   - a first component ($L_{SC}$) to learn, by the classification model, representation of samples of the training dataset based on classes respectively associated to said samples in the dataset,
   - a second component ($L_p$) configured to update the at least one initialized class prototype by optimizing a similarity between the initialized class prototype and the output of the classification model for an input of the corresponding class from the training dataset,
   - a third component ($L_d$) configured to update at least one class prototype of the set of class prototypes and the classification model by preserving, during training, an order of the relative distances between the class prototype and each output of the classification model for an input of the corresponding class from the training dataset.

2. The method of claim 1, wherein the first component uses a projection model ($g$) configured to receive as input the output of the classification model and configured to output a feature having a lower dimensionality than the output of the classification model, wherein the first component is based on the output of the projection model.

3. The method of claim 2, wherein the first component is configured to perform supervised contrastive learning.

4. The method of claim 3, wherein the first component is written as:

$$L_{SC}(X) = -\sum_{x_i \in X} \frac{1}{|A(i)|} L_{SC}(x_i)$$

with:

$$L_{SC}(x_i) = \sum_{x_p \in A(i)} log \frac{h(g \circ f(x_p), g \circ f(x_i))}{\sum_{x_a \in X/x_i} h(g \circ f(x_a), g \circ f(x_i))}$$

wherein $f$ designates the classification model, $X$ designates a batch of samples from the dataset, $x_i$ designates a sample of index $i$ from the dataset, $x_p$ designates a sample of index $p$ from the dataset, $x_a$ designates a sample of index $a$ from the dataset, $g$ designates the projection model, $A$(i) designates samples that form positive pairs with $x_i$, and $h$ is the following function:

$$h(a, b) = \exp(sim(a, b)/\tau)$$

wherein $\tau$ is a constant parameter and *sim* is the following function:

$$sim(a, b) = \frac{a^T b}{\|a\|\|b\|}$$

5. The method of any one of claims 1 to 4, wherein initialization of a class prototype comprises determining a random prototype having a dimensionality equal to a dimensionality of the output of the classification model.

6. The method of any one of claims 1 to 5, wherein the second component is written as:

$$L_p(X) = -\frac{1}{|X|} \sum_{x_i, y_i \in X, Y} sim(p_{yi}, sg[f(x_i)])$$

wherein f designates the classification model, $x_i$ designates a sample of index i from the dataset, $y_i$ designates a class associated with $x_i$ in the dataset, $p_{yi}$ designates a class prototype for $y_i$ from the at least one initialized class prototypes, *sg*[] is the stop gradient operation, $X$, $Y$ designates the dataset, and *sim* is the following function:

$$sim(a, b) = \frac{a^T b}{\|a\|\|b\|}$$

7. The method of any one of claims 1 to 6, wherein the third component is written as:

$$L_d(X) = \sum_{p_k \in P_o} KL(P_t(k)\|P_{t-1}(k))$$

wherein

$$P_t(k) = P_t(p_k^t, X)_i = \frac{h(p_k^t, f\ (x_i)}{\sum_{x_j \in X} h(p_k^t, f\ (x_j))}$$

and wherein $f$ designates the classification model, $X$ designates a batch of samples from the dataset, $x_i$ designates a sample of index i from the dataset, $x_j$ designates a sample of index $j$ from the dataset, $p_k^t$ is a prototype of index $k$, KL is the Kullback-Leiblerand divergence, and h is the following function:

$$h(a, b) = \exp\left(\frac{sim(a, b)}{\tau}\right)$$

wherein $\tau$ is a constant and $sim$ is the following function:

$$sim(a, b) = \frac{a^T b}{\|a\| \|b\|}.$$

8. The method of any one of claims 1 to 7, wherein, after training, the at least one updated initialized prototype and the at least one updated prototype form a new set of prototypes, the method further comprising a new training of the model using the new set of prototypes and a new training dataset that differs from the training dataset.

9. The method of claim 8, wherein the training dataset and the new training dataset differ by including different samples and/or samples having different classes and/or are associated with different tasks.

10. A classification model trained by the method according to any one of claims 1 to 9.

11. A system for training a classification model ($f$) with a training dataset ($X$, $Y$) and a set of class prototypes ($p_c$), the system comprising a module configured to perform initialization of a class prototype for at least one class of the training dataset not having a class prototype in the set of class prototypes, and a training module configured to use a loss function including:

   - a first component ($L_{SC}$) to learn, by the classification model, representation of samples of the training dataset based on classes respectively associated to said samples in the dataset,
   - a second component ($L_p$) configured to update the at least one initialized class prototype by optimizing a similarity between the initialized class prototype and the output of the classification model for an input of the corresponding class from the training dataset,
   - a third component ($L_d$) configured to update at least one class prototype of the set of class prototypes and the classification model by preserving, during training, an order of the relative distances between the class prototype and each output of the classification model for an input of the corresponding class from the training dataset.

12. A classification system including a classification model trained by the method according to any one of claims 1 to 9.

13. A vehicle comprising the classification system in accordance with claim 12.

14. A computer program including instructions for executing the steps of a method according to any one of claims 1 to 9 when said program is executed by a computer.

15. A recording medium readable by a computer and having recorded thereon a computer program including instructions for executing the steps of a method according to any one of claims 1 to 9.

**Amended claims in accordance with Rule 137(2) EPC.**

1. A computer-implemented method for training a classification model (*f*) designed for detecting specific objects to be taken into account by an autonomous driving system for making decisions, with a training dataset (*X, Y*) and a set of class prototypes ($p_c$), a class prototype being a generic sample representation of a class, the method comprising an initialization of a class prototype for at least one class of the training dataset not having a class prototype in the set of class prototypes, and wherein training is performed using a loss function including:

   - a first component ($L_{SC}$) to learn, by the classification model, representation of samples of the training dataset based on classes respectively associated to said samples in the dataset,
   - a second component ($L_p$) configured to update the at least one initialized class prototype by optimizing a similarity between the initialized class prototype and the output of the classification model for an input of the corresponding class from the training dataset,
   - a third component ($L_d$) configured to update at least one class prototype of the set of class prototypes and the classification model by preserving, during training, an order in which the relative distances between the class prototype and each output of the classification model for an input of the corresponding class from the training dataset are sorted relative to each other.

2. The method of claim 1, wherein the first component uses a projection model (*g*) configured to receive as input the output of the classification model and configured to output a feature having a lower dimensionality than the output of the classification model, wherein the first component is based on the output of the projection model.

3. The method of claim 2, wherein the first component is configured to perform supervised contrastive learning.

4. The method of claim 3, wherein the first component is written as:

$$L_{SC}(X) = - \sum_{x_i \in X} \frac{1}{|A(i)|} L_{SC}(x_i)$$

with:

$$L_{SC}(x_i) = \sum_{x_p \in A(i)} log \frac{h(g \circ f(x_p), g \circ f(x_i))}{\sum_{x_a \in X/x_i} h(g \circ f(x_a), g \circ f(x_i))}$$

wherein *f* designates the classification model, *X* designates a batch of samples from the dataset, $x_i$ designates a sample of index *i* from the dataset, $x_p$ designates a sample of index *p* from the dataset, $x_a$ designates a sample of index $\alpha$ from the dataset, *g* designates the projection model, *A*(*i*) designates samples that form positive pairs with $x_i$, and *h* is the following function:

$$h(a, b) = \exp(sim(a, b)/\tau)$$

wherein $\tau$ is a constant parameter and *sim* is the following function:

$$sim(a, b) = \frac{a^T b}{\|a\| \|b\|}$$

5. The method of any one of claims 1 to 4, wherein initialization of a class prototype comprises determining a random prototype having a dimensionality equal to a dimensionality of the output of the classification model.

6. The method of any one of claims 1 to 5, wherein the second component is written as:

$$L_p(X) = -\frac{1}{|X|} \sum_{x_i, y_i \in X, Y} sim(p_{yi}, sg[f\ (x_i)])$$

wherein f designates the classification model, $x_i$ designates a sample of index $i$ from the dataset, $y_i$ designates a class associated with $x_i$ in the dataset, $p_{yi}$ designates a class prototype for $y_i$ from the at least one initialized class prototypes, $sg[]$ is the stop gradient operation, $X,\ Y$ designates the dataset, and *sim* is the following function:

$$sim(a, b) = \frac{a^T b}{\|a\|\|b\|}$$

7. The method of any one of claims 1 to 6, wherein the third component is written as:

$$L_d(X) = \sum_{p_k \in P_o} KL(P_t(k)||P_{t-1}(k))$$

wherein

$$P_t(k) = P_t(p_k^t, X)_i = \frac{h(p_k^t, f\ (x_i)}{\sum_{x_j \in X} h(p_k^t, f\ (x_j))}$$

and wherein *f* designates the classification model, *X* designates a batch of samples from the dataset, $x_i$ designates a sample of index *i* from the dataset, $x_j$ designates a sample of index *j* from the dataset, $p_k^t$ is a prototype of index *k* , KL is the Kullback-Leiblerand divergence, and *h* is the following function:

$$h(a, b) = \exp\left(\frac{sim(a, b)}{\tau}\right)$$

wherein $\tau$ is a constant and *sim* is the following function:

$$sim(a, b) = \frac{a^T b}{\|a\|\|b\|}.$$

8. The method of any one of claims 1 to 7, wherein, after training, the at least one updated initialized prototype and the at least one updated prototype form a new set of prototypes, the method further comprising a new training of the model using the new set of prototypes and a new training dataset that differs from the training dataset.

9. The method of claim 8, wherein the training dataset and the new training dataset differ by including different samples and/or samples having different classes and/or are associated with different tasks.

10. A device implementing the classification model trained by the method according to any one of claims 1 to 9.

11. A system for training a classification model (*f*) designed for detecting specific objects to be taken into account by an autonomous driving system for making decisions, with a training dataset (*X, Y*) and a set of class prototypes ($p_c$), a class prototype being a generic sample representation of a class, the system comprising a module configured to perform initialization of a class prototype for at least one class of the training dataset not having a class prototype in the set of class prototypes, and a training module configured to use a loss function including:

- a first component ($L_{SC}$) to learn, by the classification model, representation of samples of the training dataset based on classes respectively associated to said samples in the dataset,
- a second component ($L_p$) configured to update the at least one initialized class prototype by optimizing a similarity between the initialized class prototype and the output of the classification model for an input of the corresponding class from the training dataset,
- a third component ($L_d$) configured to update at least one class prototype of the set of class prototypes and the classification model by preserving, during training, an order in which the relative distances between the class prototype and each output of the classification model for an input of the corresponding class from the training dataset are sorted relative to each other.

12. A classification system including a device implementing a classification model trained by the method according to any one of claims 1 to 9.

13. A vehicle comprising the classification system in accordance with claim 12.

14. A computer program including instructions for executing the steps of a method according to any one of claims 1 to 9 when said program is executed by a computer.

15. A recording medium readable by a computer and having recorded thereon a computer program including instructions for executing the steps of a method according to any one of claims 1 to 9.

**FIG. 1**

**FIG. 2**

**FIG. 3**

**FIG. 4**

**EUROPEAN SEARCH REPORT**

Application Number

EP 23 16 2437

## DOCUMENTS CONSIDERED TO BE RELEVANT

| Category | Citation of document with indication, where appropriate, of relevant passages | Relevant to claim |
|---|---|---|
| X | TOMMASO BARLETTI ET AL: "Contrastive Supervised Distillation for Continual Representation Learning", ARXIV.ORG, CORNELL UNIVERSITY LIBRARY, 201 OLIN LIBRARY CORNELL UNIVERSITY ITHACA, NY 14853, 10 June 2022 (2022-06-10), XP091243826, DOI: 10.1007/978-3-031-06427-2_50 * abstract; sections 3, 4, 4.2, 5; Equations 2, 4, 7-8 * | 1-15 |
| A | DAVARI MOHAMMADREZA ET AL: "Probing Representation Forgetting in Supervised and Unsupervised Continual Learning", 2022 IEEE/CVF CONFERENCE ON COMPUTER VISION AND PATTERN RECOGNITION (CVPR), IEEE, 18 June 2022 (2022-06-18), pages 16691-16700, XP034193684, DOI: 10.1109/CVPR52688.2022.01621 [retrieved on 2022-09-27] * abstract; section 3.3 * | 1-15 |
| A | HAO CHEN ET AL: "Unsupervised Lifelong Person Re-identification via Contrastive Rehearsal", ARXIV.ORG, CORNELL UNIVERSITY LIBRARY, 201 OLIN LIBRARY CORNELL UNIVERSITY ITHACA, NY 14853, 12 March 2022 (2022-03-12), XP091180485, * abstract; section 3.4; Equations 9, 10, 11 * | 1-15 |

-/--

**CLASSIFICATION OF THE APPLICATION (IPC)**

INV.
G06N3/09
G06N3/084

**TECHNICAL FIELDS SEARCHED (IPC)**

G06N

The present search report has been drawn up for all claims

| Place of search | Date of completion of the search | Examiner |
|---|---|---|
| The Hague | 27 July 2023 | Tebbal Barracosa, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 16 2437

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NADER ASADI ET AL:  "Tackling Online One-Class Incremental Learning by Removing Negative Contrasts", ARXIV.ORG, CORNELL UNIVERSITY LIBRARY, 201 OLIN LIBRARY CORNELL UNIVERSITY ITHACA, NY 14853, 24 March 2022 (2022-03-24), XP091184272, * abstract; section 2.2 Equation 3 * | 1-15 | |

-----

TECHNICAL FIELDS
SEARCHED        (IPC)

The present search report has been drawn up for all claims

| Place of search | Date of completion of the search | Examiner |
|---|---|---|
| The Hague | 27 July 2023 | Tebbal Barracosa, B |

EPO FORM 1503 03.82 (P04C01)

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHAUDHRY, A. ; RANZATO, M. ; ROHRBACH, M. ; ELHOSEINY, M et al.** Efficient lifelong learning with a-gem. *ICLR,* 2019
- **DE LANGE, M. ; TUYTELAARS, T.** Continual prototype evolution: Learning online from non-stationary data streams. *Proceedings of the IEEE/CVF International Conference on Computer Vision,* 2021, 8250-8259
- **CACCIA, L. ; ALJUNDI, R. ; ASADI, N. ; TUYTELAARS, T. ; PINEAU, J. ; BELILOVSKY, E et al.** New insights on reducing abrupt representation change in online continual learning. *arXiv preprint arXiv:2203.03798,* 2022
- **KHOSLA, P. ; TETERWAK, P. ; WANG, C. ; SARNA, A. ; TIAN, Y. ; ISOLA, P. ; MASCHINOT, A. ; LIU, C. ; KRISHNAN, D et al.** Supervised contrastive learning. *Advances in Neural Information Processing Systems,* 2020, vol. 33, 18661-18673
- **DAVARI, M. ; ASADI, N. ; MUDUR, S. ; ALJUNDI, R. ; BELILOVSKY, E et al.** Probing representation forgetting in supervised and unsupervised continual learning. *Proceedings of the IEEE/CVF Conference on Computer Vision and Pattern Recognition,* 2022, 16712-16721
- **AHN, H. ; KWAK, J. ; LIM, S. ; BANG, H. ; KIM, H. ; MOON, T et al.** Ss-il: Separated softmax for incremental learning. *Proceedings of the IEEE/CVF International Conference on Computer Vision (ICCV),* October 2021, 844-853
- A unifying mutual information view of metric learning: cross-entropy vs. pairwise losses. **BOUDIAF, M. ; RONY, J. ; ZIKO, I. M. ; GRANGER, E. ; PEDERSOLI, M. ; PIANTANIDA, P. ; AYED, I. B et al.** European conference on computer vision. Springer, 2020, 548-564
- Learning multiple layers of features from tiny images. **KRIZHEVSKY, A. ; HINTON, G. et al.** Technical report. University of Toronto, 2009
- **CHRABASZCZ, P. ; LOSHCHILOV, I. ; HUTTER, F et al.** A downsampled variant of imagenet as an alternative to the cifar datasets. *arXiv preprint arxiv: 1707.08819,* 2017
- **LI, Z. ; HOIEM, D.** Learning without forgetting. *IEEE Transactions on Pattern Analysis and Machine Intelligence,* 2017, vol. 40 (12), 2935-2947
- **HUSZAR, F.** On quadratic penalties in elastic weight. *arXiv preprint arXiv:1712.03847,* 2017